# EUROPEAN PATENT APPLICATION

(11) **EP 3 974 085 A1**
(43) Date of publication of application: **30.03.2022**
(21) Application number: 20810489.3
(22) Date of filing: 26.03.2020
(51) Int. Cl.: B22F 3/105, B22F 3/16, B33Y 10/00, B33Y 30/00, B29C 64/153, B29C 64/232, B29C 64/245

(54) **AM DEVICE AND METHOD FOR MANUFACTURING MOLDED OBJECT**

(30) Priority: 20.05.2019 JP 2019094592
(71) Applicant: Ebara Corporation, Tokyo 144-8510 (JP)
(72) Inventor: SHINOZAKI, Hiroyuki, Tokyo 144-8510 (JP)
(74) Representative: Emde, Eric
(86) International application number: PCT/JP2020/013580
(87) International publication number: WO 2020/235214

(57) **Abstract**

One object of the present invention is to reduce an amount of consumed metal powder. An AM apparatus is provided. This AM apparatus includes a base plate configured to support a fabrication material, and a beam source configured to generate a beam with which the fabrication material supported on the base plate is irradiated. The base plate includes a plurality of divided base plates adjacent to each other.

## Description

### TECHNICAL FIELD

The present invention relates to an AM apparatus and a method for manufacturing a fabricated object.

### BACKGROUND ART

There are known techniques for directly fabricating a three-dimensional object based on three-dimensional data on a computer that expresses the three-dimensional object. Known examples thereof include the Additive Manufacturing (AM) technique. As one example, in the AM technique using metal powder, each layer of the three-dimensional object is fabricated by, toward the metal powder deposited all over a surface, irradiating a portion thereof to be fabricated with a beam such as a laser beam or an electron beam serving as a heat source, and melting and solidifying or sintering the metal powder. In the AM technique, a desired three-dimensional object can be fabricated by repeating such a process.

In the AM technique, execution data such as an irradiation position and a beam track of the beam such as the laser beam and the electron beam is generated layer by layer based on the three-dimensional CAD data that expresses the three-dimensional object targeted for the fabrication. An AM apparatus automatically carries out the additive manufacturing based on this execution data generated under computer control. More specifically, the AM apparatus supplies the metal powder corresponding to one layer onto a base plate that can be lifted and lowered, irradiates the irradiation position based on the execution data with the beam to melt and solidify or sinter the metal powder, thereby creating a first layer of the three-dimensional object. Subsequently, after lowering the base plate, the AM apparatus supplies the metal powder corresponding to one layer onto the base plate again, irradiates the irradiation position based on the execution data with the beam to melt and solidify or sinter the metal powder, thereby creating a second layer of the three-dimensional object. The AM apparatus creates the desired fabricated object by repeating this process. As such an AM apparatus, for example, PTL 1 and PTL 2 are known.

### CITATION LIST

### PATENT LITERATURE

PTL 1: Japanese Patent Application Public Disclosure No. 8-281807
PTL 2: Japanese Patent Domestic Announcement No. 2016-534234

### SUMMARY OF INVENTION

### TECHNICAL PROBLEM

In recent years, there has been a demand for an increase in the size of the fabricated object manufactured by such an AM apparatus. When the fabricated object is manufactured by the AM apparatus, unsintered metal powder remains around the fabricated object. The unsintered metal powder is oxidized, and therefore regeneration processing is necessary to reuse this metal powder. Further, a part of the metal powder around the fabricated object may be indirectly melted by receiving thermal energy when the fabricated object is sintered. The metal powder melted in this manner cannot be reused in principle, and therefore a material loss occurs. Therefore, when the size of the fabricated object increases, the amount of unsintered metal powder increases and therefore a further longer time is required for the regeneration processing. Further, the metal powder indirectly melted due to the sintering of the fabricated object also increases, and therefore a further large material loss can occur. The increase in the size of the fabricated object also leads to both an increase in time and labor to flatly deposit the metal powder all over the base plate and an increase in time and labor to collect the unsintered metal powder after the fabricated object is sintered. Further, the range irradiated with the beam is widened, and therefore the fabrication time per layer is also lengthened.

Further, when a fabricated object having a surface extending at a predetermined angle with respect to the upper surface of the base plate is created by the AM apparatus, a support member is also created from the metal powder to keep the fabricated object in a desired shape. This support member is supposed to be removed after the fabricated object is manufactured, and therefore the support member is preferably small in amount. However, when the size of the fabricated object increases, the size of the support member also increases according thereto, which leads to an increase in the amount of metal powder used for the support member, thereby resulting in an increase in the material loss and also resulting in an increase in time and labor to remove the support member.

In the conventional AM apparatuses, when the fabricated object created on the base plate is extracted, the base plate and the fabricated object are detached from the AM apparatus together, and the fabricated object is separated off from the base plate by wire electrical discharge machining after being thermally processed. When the size of the fabricated object increases, the size of the base plate also increases according thereto, which makes it difficult to detach the base plate and the fabricated object from the AM apparatus. Further, it is also difficult to separate the large-size fabricated object off from the base plate.

The present invention has been made in consideration of at least one of the above-described problems, and one of objects thereof is to provide an AM apparatus capable of reducing the amount of consumed metal powder.

### SOLUTION TO PROBLEM

According to one aspect of the present invention, an AM apparatus is provided. This AM apparatus includes a base plate configured to support a fabrication material, and a beam source configured to generate a beam with which the fabrication material supported on the base plate is irradiated. The base plate includes a plurality of divided base plates adjacent to each other.

According to another aspect of the present invention, a method for manufacturing a fabricated object is provided. This method for manufacturing the fabricated object includes supporting a fabrication material on a plurality of divided base plates adjacent to each other, irradiating the fabrication material supported on the plurality of divided base plates with a beam, and lowering a part of the plurality of divided base plates.

### BRIEF DESCRIPTION OF DRAWINGS

Fig. 1 illustrates a schematic view of an AM apparatus according to an embodiment of the present invention.
Fig. 2A is a schematic side view of a fabrication unit.
Fig. 2B is a schematic top view of the fabrication unit.
Fig. 3 is a schematic side cross-sectional view of the fabrication unit with a fabricated object partially created.
Fig. 4 is a schematic side cross-sectional view of the fabrication unit with the fabricated object entirely created.
Fig. 5 is a schematic side cross-sectional view of the fabrication unit with another fabricated object partially created.
Fig. 6 is a schematic side cross-sectional view of the fabrication unit with the other fabricated object entirely created.
Fig. 7 is a schematic side cross-sectional view illustrating another example of the fabrication unit.
Fig. 8 is a schematic top view of another example of the fabrication unit.
Fig. 9 is a schematic top view of further another example of the fabrication unit.

### DESCRIPTION OF EMBODIMENTS

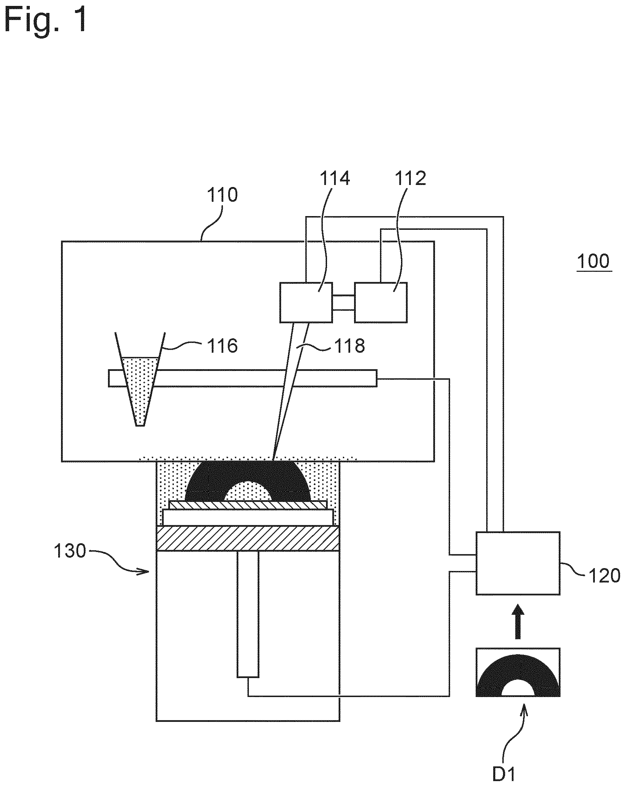

In the following description, an embodiment of the present invention will be described with reference to the drawings. In the drawings that will be described below, identical or corresponding components will be indicated by identical reference numerals, and redundant descriptions will be omitted. Fig. 1 illustrates a schematic view of an AM apparatus according to the present embodiment. As illustrated in Fig. 1, an AM apparatus 100 includes a process chamber 110, a control device 120, and a fabrication unit 130.

A beam source 112, a scanning device 114, and a powder distributor 116 are disposed inside the process chamber 110. The beam source 112 can be configured to generate, for example, an electron beam 118. In this case, the scanning device 114 can be, for example, a deflection coil for controlling a position irradiated with the electron beam 118. Alternatively, the beam source 112 may be configured to generate a laser beam. In this case, the scanning device 114 can include a mirror, a lens, or the like that deflects the laser beam. Metal powder (corresponding to one example of a fabrication material) supported on a base plate of the fabrication unit 130 is irradiated with the beam generated by the beam source 112. The base plate will be described below. For example, powder such as SUS 316L, a titanium alloy, an aluminum alloy, a magnesium alloy, a copper alloy, and a nickel alloy can be employed as the metal powder.

The powder distributor 116 is disposed so as to generate a thin layer of the metal powder on the base plate of the fabrication unit 130. The base plate will be described below. More specifically, the powder distributor 116 includes a hopper capable of storing the metal powder therein, and is horizontally movably configured.

Preferably, a vacuum environment suitable to generate the electron beam 118 is maintained by, for example, a not-illustrated vacuum system inside the process chamber 110 to prevent oxidation of the metal powder in the powder distributor 116 and the fabrication unit 130. Further, inert gas, such as nitrogen, helium, and argon, may be supplied from a not-illustrated gas supply source into the process chamber 110.

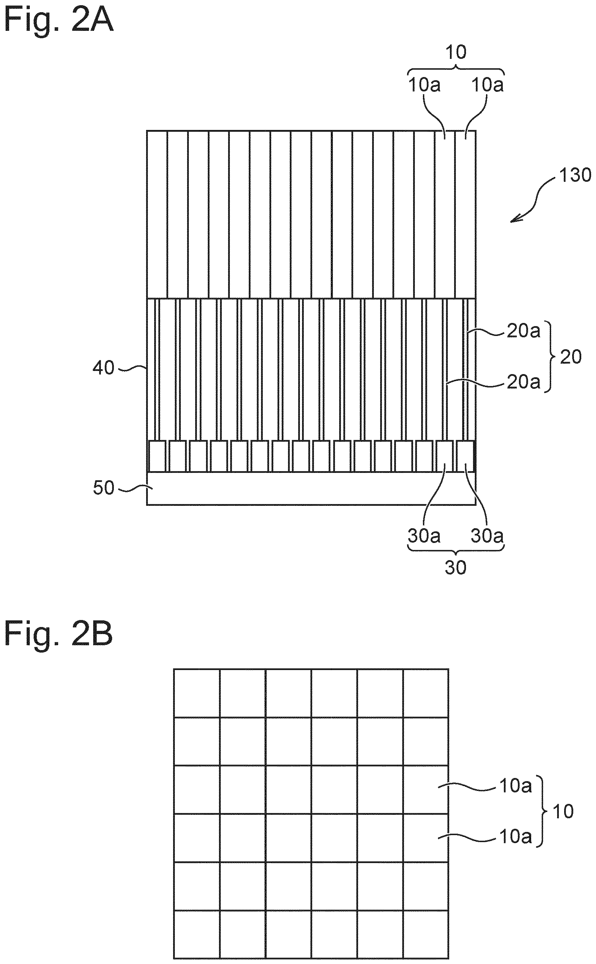

The control device 120 is communicably connected to the beam source 112, the scanning device 114, the powder distributor 116, and the fabrication unit 130. The control device 120 generates execution data such as a beam irradiation position, a beam track, or the like for each layer based on three-dimensional CAD data D1, and controls the beam source 112, the scanning device 114, the powder distributor 116, and the fabrication unit 130 based on this execution data. More specifically, the control device 120 controls the output of the beam source 112, the beam irradiation position and the beam track by the scanning device 114, the supply of the powder by the powder distributor 116, and a driving device 30 (refer to, for example, Fig. 2A) of the fabrication unit 130. The driving device 30 will be described below.

Next, the detailed structure of the fabrication unit 130 illustrated in Fig. 1 will be described. Fig. 2A is a schematic side view of the fabrication unit 130. Fig. 2B is a schematic top view of the fabrication unit 130. As illustrated in Fig. 2A, the fabrication unit 130 includes a base plate 10 supporting the metal powder, a rod 20 connected to the base plate 10, and the driving device 30 configured to lift and lower the rod 20 and the base plate 10. Further, the fabrication unit 130 includes a chamber 40 surrounding around at least the base plate 10. In the present specification, the base plate 10 "supporting the metal powder" includes the base plate 10 directly supporting the metal powder, and the base plate 10 indirectly supporting the metal powder via, for example, a metallic plate 60, which will be described below.

As illustrated in Figs. 2A and 2B, the base plate 10 of the fabrication unit 130 includes a plurality of divided base plates 10a adjacent to each other. In the illustrated example, the shape of each of the divided base plates 10a in a planar view is substantially quadrangular, and the divided base plates 10a are formed by dividing the base plate 10 in a grid-like manner. A gap between the adjacent divided base plates 10a can be set so as to prevent the metal powder from entering therein as much as possible and also prevent excessive friction from occurring between the adjacent divided base plates 10a. In the state illustrated in Fig. 2A, the plurality of divided base plates 10a is positioned in such a manner that they are located at the uppermost position and the upper surfaces of all of the divided base plates 10a are arranged in a coplanar manner. The base plate 10 can be made from, for example, thermally resistant metal or ceramics such as alumina.

As illustrated in Fig. 2A, the rod 20 of the fabrication unit 130 includes a plurality of rods 20a, which is connected to the lower surface sides of the plurality of divided base plates 10a, respectively. Further, the driving device 30 of the fabrication unit 130 includes a plurality of driving devices 30a, which individually independently lifts and lowers the plurality of rods 20a and the plurality of divided base plates 10a, respectively. In other words, the control device 120 illustrated in Fig. 1 is configured to control the plurality of divided base plates 10a individually independently. The plurality of driving devices 30a can be, for example, a stepping motor, a hydraulic cylinder, or a pinion gear. In the case where the plurality of driving devices 30a is a pinion gear, the plurality of rods 20a includes a groove corresponding to the pinion gear, and functions as a rack gear. The plurality of driving devices 30a is fixed to a support plate 50.

The plurality of rods 20a and the plurality of driving devices 30a are provided for the plurality of divided base plates 10a, respectively, so as to correspond to them one-on-one in the example illustrated in Figs. 2A and 2B, but are not limited thereto. For example, the rod 20a and the driving device 30a may be provided only to the divided base plate 10a that should be lifted and lowered among the plurality of divided base plates 10a. Alternatively, the AM apparatus 100 may be configured to lift and lower two or more divided base plates 10a among the plurality of divided base plates 10a by a single driving device 30a.

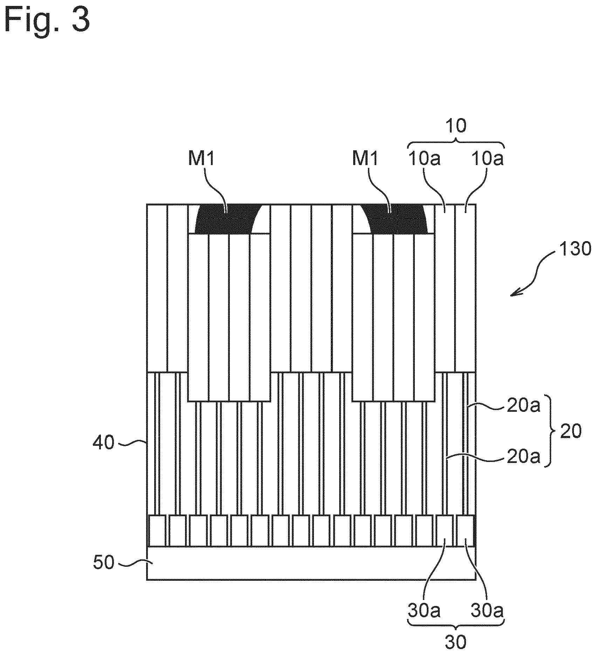

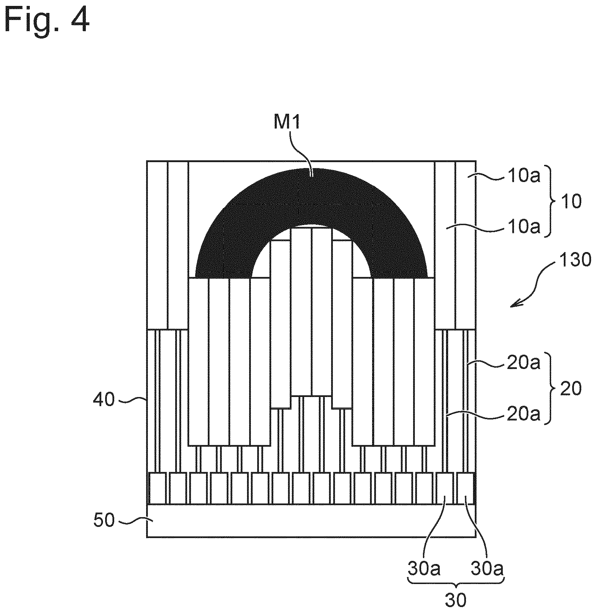

Next, a process of creating the fabricated object in the fabrication unit 130 illustrated in Figs. 2A and 2B will be described. Fig. 3 is a schematic side cross-sectional view of the fabrication unit 130 with the fabricated object partially created. Fig. 4 is a schematic side cross-sectional view of the fabrication unit 130 with the fabricated object entirely created. First, the control device 120 generates a thin layer corresponding to one layer of the metal powder on the divided base plates 10a by controlling the powder distributor 116. Subsequently, the control device 120 controls the beam source 112 and the scanning device 114 based on the execution data such as the beam irradiation position or the beam track for each layer that is generated from the three-dimensional CAD data D1, thereby irradiating a desired irradiation position with the beam and sintering the metal powder, and thus creating a first layer of a fabricated object M1.

After the first layer is created, the control device 120 lowers a part of the divided base plates 10a based on the above-described execution data. More specifically, the control device 120 lowers at least the divided base plates 10a supporting the first layer of the fabricated object M1, and lowers the divided base plates 10a corresponding to a beam irradiation position for a second layer as necessary. At this time, the divided base plates 10a are lowered only by, for example, 10 µm to 100 µm as a thickness corresponding to one layer. Subsequently, the control device 120 replenishes the metal powder onto the lowered divided base plates 10a by controlling the powder distributor 116. More specifically, the metal powder is replenished onto the lowered divided base plates 10a in such a manner that the height of the metal powder on the divided base plates 10a located at an initial position where the divided base plates 10a are not lowered and the height of the metal powder on the lowered divided base plates 10a substantially match each other. The control device 120 controls the beam source 112 and the scanning device 114, thereby irradiating a desired irradiation position with the beam and sintering the metal powder, and thus creating the second layer of the fabricated object M1.As illustrated in Fig. 3, when a plurality of layers of the fabricated object M1 is created, the divided base plates 10a supporting the fabricated object M1 among the plurality of divided base plates 10a are lowered.

The fabrication unit 130 can create the entire fabricated object M1 as illustrated in Fig. 4 by repeating the above-described processing for each layer. The fabricated object M1 illustrated in Figs. 3 and 4 has a substantially dorm-like shape.

In the above-described manner, the AM apparatus 100 according to the present embodiment includes the plurality of divided base plates 10a adjacent to each other, thereby being able to reduce the amount of metal powder required to create the fabricated object M1 compared to when the base plate 10 is entirely lowered by lowering only the divided base plates 10a supporting each layer. As a result, the AM apparatus 100 can reduce the amount of metal powder around the fabricated object that is indirectly melted due to the sintering of the metal powder, thereby reducing a loss of the metal powder. Further, the AM apparatus 100 can reduce the amount of unsintered metal powder around the fabricated object, thereby also reducing time and labor to perform the processing for regenerating the oxidized metal powder. Further, the AM apparatus 100 can reduce the amount of metal powder required to create the fabricated object M1, thereby also reducing time and labor to flatly deposit the metal powder all over the base plate 10 and time and labor to collect the unsintered metal powder after the fabricated object M1 is sintered.

Further, the AM apparatus 100 according to the present embodiment can reduce the amount of a support member required to support the fabricated object M1 by lowering each of the divided plates 10a according to the shape of the fabricated object M1 to be created, thereby also reducing the amount of metal powder used for the support member as a result thereof.

The AM apparatus 100 according to the present embodiment includes the driving device 30, which can lift and lower the plurality of divided base plates 10a independently. Due to this configuration, the AM apparatus 100 can lower and lift a part of the plurality of divided base plates 10a according to the shape of the fabricated object M1.Further, in the present embodiment, the plurality of driving devices 30a is provided for the plurality of divided base plates 10a, respectively. Due to this configuration, the AM apparatus 100 can lift and lower the plurality of divided base plates 10a individually independently, thereby lowering and lifting the plurality of divided base plates 10a according to the shape of the fabricated object M1 further flexibly. As a result, the AM apparatus 100 can further reduce the amount of metal powder required to create the fabricated object M1.

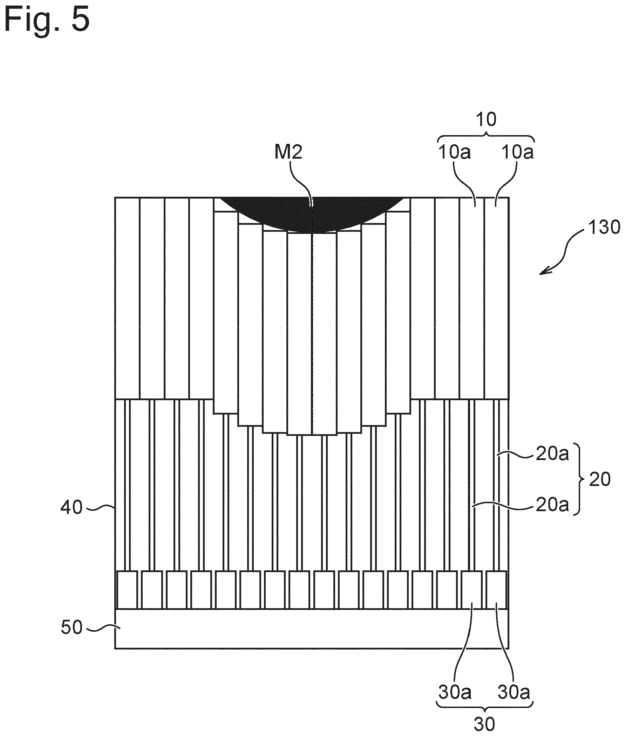

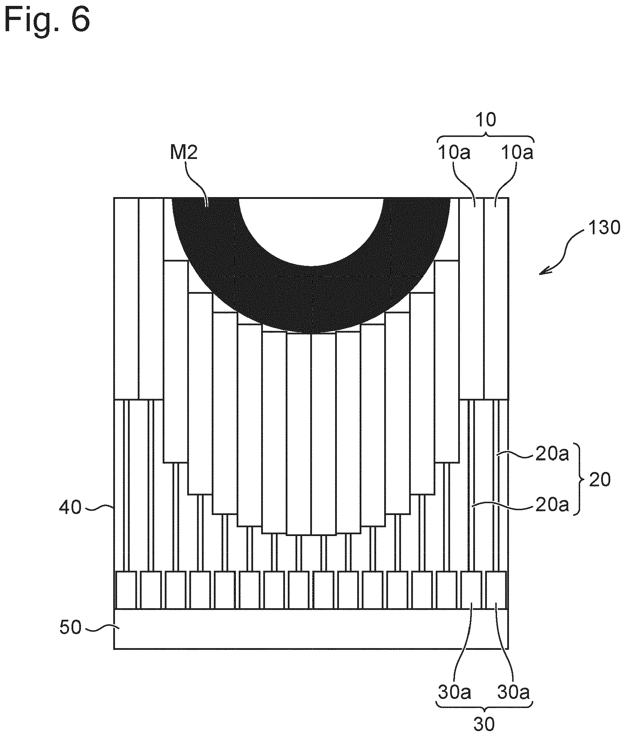

Next, an example in which a differently shaped fabricated object is created will be described. Fig. 5 is a schematic side cross-sectional view of the fabrication unit 130 with another fabricated object partially created. Fig. 6 is a schematic side cross-sectional view of the fabrication unit 130 with the other fabricated object entirely created. As illustrated in Fig. 5, when a plurality of layers of a fabricated object M2 is created in the fabrication unit 130, the divided base plates 10a supporting the fabricated object M2 are lowered. Further, when the next layer is created from the state illustrated in Fig. 5, the control device 120 lowers at least the divided base plates 10a supporting the fabricated object M2 and lowers the divided base plates 10a corresponding to the beam irradiation position for the next layer as necessary based on the execution data.

The fabrication unit 130 can create the entire fabricated object M2 as illustrated in Fig. 6 by repeating the above-described processing for each layer. The fabricated object M2 illustrated in Figs. 5 and 6 has a substantially inverted dome-like shape. When the inverted dome-shaped fabricated object M2 like the illustrated example is created, a support member may be generated between the base plate 10 and the fabricated object M2 as necessary.

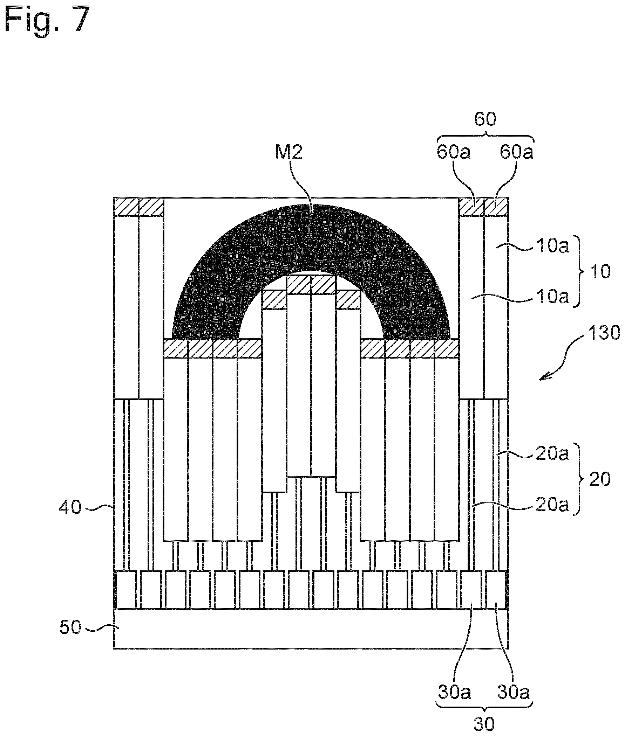

Next, another example of the fabrication unit 130 will be described. Fig. 7 is a schematic side cross-sectional view illustrating another example of the fabrication unit 130. The fabrication unit 130 illustrated in Fig. 7 includes the metallic plate 60 on the upper surface of the base plate 10. The metallic plate 60 is fixed to the upper surface of the base plate 10 by, for example, a fastening unit such as a bolt. The fastening unit for fixing the metallic plate 60 to the base plate 10 is provided at a position uninfluential on the creation of the fabricated object.

In the illustrated example, the metallic plate 60 includes a plurality of metallic plates 60a, which is fixed to the plurality of divided base plates 10a, respectively. However, the metallic plate 60 is not limited thereto, and a single metallic plate 60a may be fixed to two or more divided base plates 10a among the plurality of divided base plates 10a. In other words, in this case, the two or more divided base plates 10a with the single metallic plate 60a fixed thereto can be integrally lifted and lowered by the driving device 30.

After the fabricated object is entirely created as illustrated in Fig. 7, the fabricated object is extracted from the AM apparatus 100. In the example illustrated in Fig. 7, first, the metallic plate 60a, which the fabricated object is in contact with, is unfixed from the divided base plate 10a. Subsequently, the fabricated object is detached from the fabrication unit 130 together with the metallic plate 60a, and the metallic plate 60a and the fabricated object are separated off from each other by wire electrical discharge machining after being thermally processed.

In the AM apparatus 100 illustrated in Fig. 7, the base plate 10 supports the metal powder via the metallic plate 60. Due to this configuration, the fabricated object is created on the metallic plate 60, and therefore can be easily extracted from the AM apparatus 100 by demounting the metallic plate 60 from the base plate 10. Further, the metallic plate 60 includes the plurality of metallic plates 60a, and therefore even an increase in the size of the fabricated object can be handled smoothly by separating each of the plurality of metallic plates 60a off from the fabricated object. Therefore, the fabricated object and the plurality of metallic plates 60a can be easily separated off from each other compared to when a large-size base plate and a large-size fabricated object are separated off from each other.

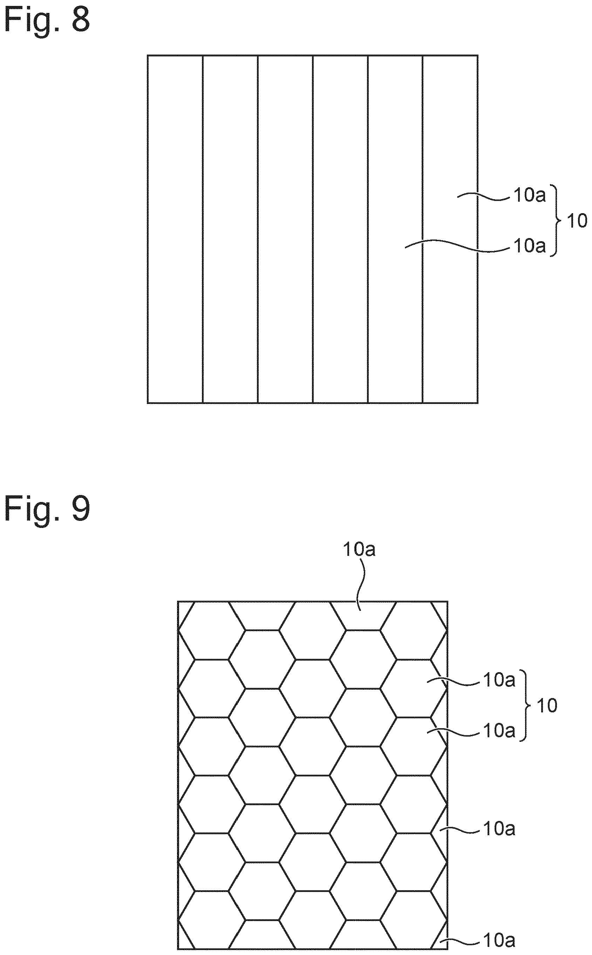

Next, examples of another shape of the divided base plate 10a in a planar view will be described. Fig. 8 is a schematic top view of another example of the fabrication unit 130. Fig. 9 is a schematic top view of further another example of the fabrication unit 130. In the example illustrated in Fig. 8, each of the divided base plates 10a of the fabrication unit 130 has a substantially rectangular shape in a planar view, and the divided base plates 10a are formed by dividing the base plate 10 into rectangles. In the example illustrated in Fig. 9, each of the divided base plates 10a of the fabrication unit 130 has a substantially regular hexagonal shape in a planar view, and the divided base plates 10a are formed by dividing the base plate 10 in a honeycomb manner. In the example illustrated in Fig. 9, a divided base plate 10a having a shape other than the substantially regular hexagonal shape can be provided as appropriate to reduce the gap between the chamber 40 and the divided base plate 10a. The base plate 10 of the fabrication unit 130 illustrated in Figs. 3 to 7 may be divided as illustrated in Fig. 8 or 9.

Having described the embodiment of the present invention, the above-described embodiment of the invention is intended to only facilitate the understanding of the present invention, and is not intended to limit the present invention thereto. It is apparent that the present invention can be modified or improved without departing from the spirit of the present invention, and includes equivalents thereof. Further, the individual components described in the claims and the specification can be arbitrarily combined or omitted within a range that allows them to remain capable of achieving at least a part of the above-described objects or bringing about at least a part of the above-described advantageous effects.

Some of configurations disclosed in the present specification will be described below.

According to a first configuration, an AM apparatus is provided. This AM apparatus includes a base plate configured to support a fabrication material, and a beam source configured to generate a beam with which the fabrication material supported on the base plate is irradiated. The base plate includes a plurality of divided base plates adjacent to each other.

According to the first configuration, the AM apparatus includes the plurality of divided base plates adjacent to each other, thereby being able to reduce the amount of the fabrication material required to create a fabricated object compared to when the base plate is entirely lowered by lowering only the divided base plate supporting each layer. As a result, the AM apparatus can reduce the amount of the fabrication material around the fabricated object that is indirectly melted due to the sintering of the fabrication material, thereby reducing a loss of the fabrication material. Further, the AM apparatus can reduce the amount of the fabrication material unsintered around the fabricated object, thereby also reducing time and labor to perform processing for regenerating the oxidized fabrication material. Further, the AM apparatus can reduce the amount of the fabrication material required to create the fabricated object, thereby also reducing time and labor t to flatly deposit the fabrication material all over the base plate and time and labor to collect the unsintered fabrication material after the fabricated object is sintered. Further, the AM apparatus can reduce the amount of a support member required to support the fabricated object by lowering each of the divided plates according to the shape of the fabricated object to be created, thereby also reducing the amount of the metal powder used for the support member as a result thereof.

According to a second configuration, the AM apparatus according to the first configuration further includes a driving device configured to lift and lower the plurality of divided base plates independently.

According to the second configuration, the AM apparatus includes the driving device, which can raise and lower the plurality of divided base plates independently. Due to this configuration, the AM apparatus can lower and lift a part of the plurality of divided base plates according to the shape of the fabricated object.

According to a third configuration, in the AM apparatus according to the second configuration, the driving device includes a plurality of driving devices provided to the plurality of divided base plates, respectively.

According to the third configuration, the plurality of driving device is provided for the plurality of divided base plates, respectively. Due to this configuration, the AM apparatus can lift and lower the plurality of divided base plates individually independently, thereby lowering and lifting the plurality of divided base plates according to the shape of the fabricated object further flexibly. As a result, the AM apparatus can further reduce the amount of the fabrication material required to create the fabricated object.

According to a fourth configuration, the AM apparatus according to any of the first configuration to the third configuration includes a metallic plate detachably attachably fixed on the base plate.

According to the fourth configuration, the base plate supports the fabrication material via the metallic plate. Due to this configuration, the fabricated object is created on the metallic plate, and therefore can be easily extracted from the AM apparatus by demounting the metallic plate from the base plate.

According to a fifth configuration, in the AM apparatus according to the fourth configuration, the metallic plate includes a plurality of metallic plates fixed to the plurality of divided base plates, respectively.

According to the fifth configuration, the metallic plate includes the plurality of metallic plates, and therefore even an increase in the size of the fabricated object can be handled smoothly by separating each of the plurality of metallic plates off from the fabricated object. Therefore, the fabricated object and the plurality of metallic plates can be easily separated off from each other compared to when a large-size base plate and a large-size fabricated object are separated off from each other.

According to a sixth configuration, a method for manufacturing a fabricated object is provided. This method for manufacturing the fabricated object includes supporting a fabrication material on a plurality of divided base plates adjacent to each other, irradiating the fabrication material supported on the plurality of divided base plates with a beam, and lowering a part of the plurality of divided base plates.

According to the sixth configuration, the method includes lowering a part of the divided base plates adjacent to each other, thereby being able to reduce the amount of the fabrication material required to create the fabricated object compared to when the base plate is entirely lowered. As a result, the method can reduce the amount of the fabrication material around the fabricated object that is indirectly melted due to the sintering of the fabrication material, thereby reducing a loss of the fabrication material. Further, the method can reduce the amount of the fabrication material unsintered around the fabricated object, thereby also reducing time and labor to perform processing for regenerating the oxidized fabrication material. Further, the method can reduce the amount of the fabrication material required to create the fabricated object, thereby also reducing time and labor t to flatly deposit the fabrication material all over the base plate and time and labor to collect the unsintered fabrication material after the fabricated object is sintered. Further, the AM apparatus can reduce the amount of a support member required to support the fabricated object by lowering each of the divided plates according to the shape of the fabricated object to be created, thereby also reducing the amount of metal powder used for the support member as a result thereof.

### REFERENCE SIGNS LIST

- 10: base plate
- 10a: divided base plate
- 30: driving device
- 30a: driving device
- 60: metallic plate
- 60a: metallic plate
- 100: AM apparatus
- 112: beam source
- 120: control device
- 130: fabrication unit

## Claims

1. An AM apparatus comprising:
a base plate configured to support a fabrication material; and
a beam source configured to generate a beam with which the fabrication material supported on the base plate is irradiated,
wherein the base plate includes a plurality of divided base plates adjacent to each other.

2. The AM apparatus according to claim 1, further comprising a driving device configured to lift and lower the plurality of divided base plates independently.

3. The AM apparatus according to claim 2, wherein the driving device includes a plurality of driving devices provided to the plurality of divided base plates, respectively.

4. The AM apparatus according to any one of claims 1 to 3, further comprising a metallic plate detachably attachably fixed on the base plate.

5. The AM apparatus according to claim 4, wherein the metallic plate includes a plurality of metallic plates fixed to the plurality of divided base plates, respectively.

6. A method for manufacturing a fabricated object, the method comprising:
supporting a fabrication material on a plurality of divided base plates adjacent to each other;
irradiating the fabrication material supported on the plurality of divided base plates with a beam; and
lowering a part of the plurality of divided base plates.
